# NOUVEAU FASCICULE DE BREVET EUROPEEN

(11) **EP 0 348 313 B2**
(45) Date de publication et mention de la décision concernant l'opposition: **26.03.1997**
(45) Mention de la délivrance du brevet: 13.01.1993
(21) Numéro de dépôt: 89420218.3
(22) Date de dépôt: 14.06.1989
(51) Int. Cl.: H02B 13/02

(54) **Poste blindé à haute tension et à double jeu de barres d'alimentation**
Gekapselte Station für Hochspannung mit Zweifachversorgung
Shielded high-voltage station with a double bus bar

(30) Priorité: 20.06.1988 FR 8808353
(43) Date de publication de la demande: 27.12.1989
(73) Titulaire: MERLIN GERIN, F-38240 Meylan (FR)
(72) Inventeur: Messie, Michel, F-38050 Grenoble Cedex (FR); Diaferia, Aldo, F-38050 Grenoble Cedex (FR)
(74) Mandataire: Hecké, Gérard

(56) Documents cités:
- EP-A- 0 235 006
- DE-U- 1 681 782
- I.E.E.E. TRANSACTIONS ON POWER DELIVERY vol. PWRD2, no. 3, juillet 1987, New York,USA pages 791 - 798; T.MAEDA ET AL: "Development of D-GIS aimed at easy restoration from internal fault"
- "Neuedreipolige gekapselte, SF6-isolierte Schaltanlage 8D8 für 123 bis 145 kV Nennspannung" ( Siemens Energietechnik 5, 1983, Sonderheft "Hochspannungstechnik".
- "Switch to the future with SF6 Insulated Switchgear" Siemens 1985.

## Description

L'invention est relative à un poste blindé à haute tension et à double jeu de barres d'alimentation, ayant une enveloppe métallique mise à la terre et remplie d'un gaz isolant à rigidité diélectrique élevée, ladite enveloppe étant subdivisée dans chaque travée en différents compartiments étanches comprenant notamment :
- un compartiment disjoncteur de logement d'un disjoncteur assurant la protection du départ de la travée;
- un premier compartiment jeu de barres renfermant un premier sectionneur d'aiguillage associé à au moins une barre conductrice du premier jeu de barres d'alimentation;
- un deuxième compartiment jeu de barres renfermant un deuxième sectionneur d'aiguillage associé à au moins une barre conductrice du deuxième jeu de barres d'alimentation;
- et un dispositif de connexion électrique commune entre le disjoncteur et les deux sectionneurs d'aiguillage, lequel dispositif est logé dans le compartiment disjoncteur, et comprenant un conducteur intermédiaire s'étendant parallèlement au disjoncteur dans l'alignement avec un sectionneur de mise à la terre , et constituant le point commun de raccordement du disjoncteur avec les deux jeux de barres, et au moins une liaison électrique déconnectable.

En cas d'échange d'un isolateur support d'un jeu de barres, certains types de compartimentage de poste par intégration de plusieurs fonctions dans un même compartiment présente l'inconvénient d' une mise hors tension simultanée des deux traversées adjacentes à l'isolateur support défectueux. Il en résulte des problèmes de continuité électrique sur les départs de ces deux travées pendant toute la durée de la réparation. La demande de brevet français n° 2.594.607 a déjà proposé une possibilité d'intervention sur une partie du poste pendant que l'autre partie puisse rester sous tension grâce au logement des contacts du sectionneur d'aiguillage dans un carter intermédiaire de faible volume séparé du compartiment jeu de barres par une cloison isolante. Le mécanisme de commande du sectionneur d'aiguillage est maintenu dans le compartiment jeu barres, ce qui impose une liaison mécanique traversant de manière étanche ladite cloison. Le jeu de barres en réparation peut être isolé de la travée par ouverture des contacts du sectionneur d'aiguillage avec maintien de la pression de gaz isolant SF6 dans le carter intermédiaire. Une telle architecture est onéreuse car elle nécessite une étanchéité le long des passages pour les broches du sectionneur, et un dispositif de surveillance de la pression de gaz dans chaque carter de la zone de sectionnement des sectionneurs d'aiguillage.

Le poste blindé décrit dans la revue SIEMENS Energietechnik 5, 1983 Sonderhaft Hochspannungs technik, décrit un poste conforme au préambule de la revendication 1, dans lequel le conducteur intermédiaire est équipé de plots de contacts latéraux emboîtés dans des contacts à tulipe fixés sur des isolateurs supports, lesquels séparent le compartiment disjoncteur des premier et deuxième compartiments jeu de barres. Ces plots de contacts ne sont pas agencés axialement aux extrémités du conducteur intermédiaire, et s'étendent perpendiculairement d'un même côté du conducteur intermédiaire. En cas de réparation de l'un des deux jeux de barres,-il est nécessaire de démonter à la fois le disjoncteur et le conducteur intermédiaire pour accéder aux différents plots de contacts. Le disjoncteur entier doit d'abord être extrait horizontalement de l'enveloppe avant de démonter complètement le point commun autorisant la déconnexion.

L'objet de l'invention consiste à simplifier la réalisation d'un poste blindé à double jeux de barres d'alimentation, autorisant une intervention sur l'un des jeux de barres sans mise hors tension simultanée de deux travées adjacentes.

Le poste blindé selon l'invention est caractérisé en ce que la liaison électrique déconnectable est agencée axialement à chaque extrémité du conducteur intermédiaire pour créer après démontage, un premier ou un deuxième intervalle d'isolement A, B prédéterminé dans le compartiment disjoncteur , respectivement avec les connecteurs de raccordement de l'un des sectionneurs d'aiguillage, l'alimentation du disjoncteur étant réalisée par l'intermédiaire de l'autre sectionneur d'aiguillage, que l'une des extrémités du conducteur intermédiaire comporte un premier contact à tulipe destiné à recevoir un premier plot de contact solidaire d'une pièce de raccordement en forme d'éclisse , fixée par une première vis d'assemblage au connecteur du premier sectionneur d'aiguillage , le démontage de l'éclisse après dévissage de la vis engendrant ledit premier intervalle d'isolement A en cas de réparation du premier jeu de barre , et que l'autre extrémité du conducteur intermédiaire est équipé d'un deuxième plot de contact destiné à pénétrer dans un deuxième contact à tulipe porté par le connecteur du deuxième sectionneur d'aiguillage , le démontage du deuxième plot de contact engendrant ledit deuxième intervalle d'isolement B en cas de réparation du deuxième jeu de barres .

L'invention est applicable à un poste à enveloppe monophasée ou triphasée.

D'autres avantages et caractéristiques ressortiront plus clairement de la description qui va suivre d'un mode de réalisation donné à titre d'exemple non limitatifs, et représenté aux dessins annexés dans lesquels :
- la figure 1 est une vue schématique en élévation du poste blindé selon l'invention, les appareils de coupure et de sectionnement étant représentés en position d'ouverture;
- la figure 2 représente une vue en plan de la figure 1, montrant deux travées adjacentes du poste;
- la figure 3 montre le schéma électrique unifilaire de la travée selon la figure 1;
- la figure 4 est une vue partielle à échelle agrandie de la figure 1, représentant le dispositif de connexion entre le disjoncteur et les deux jeux de barres;
- la figure 5 est une vue en plan du compartiment disjoncteur après démontage du couvercle et du dispositif de connexion;
- les figures 6 et 7 montrent le dispositif de connexion pour l'une des phases, après déconnexion d'une liaison électrique engendrant un premier ou un deuxième intervalle d'isolement respectivement lorsque le premier ou le deuxième jeu de barres est en réparation.

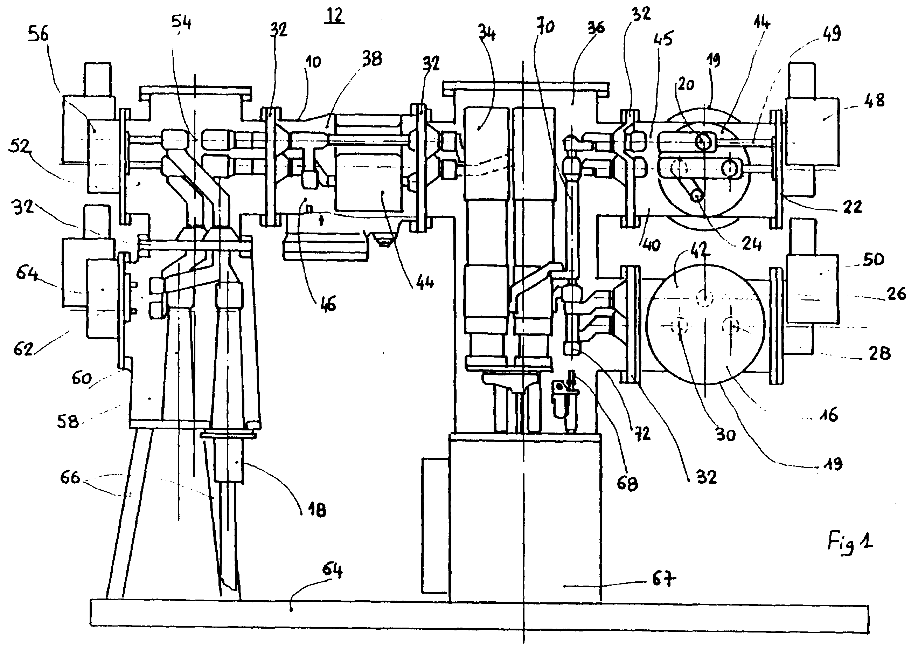

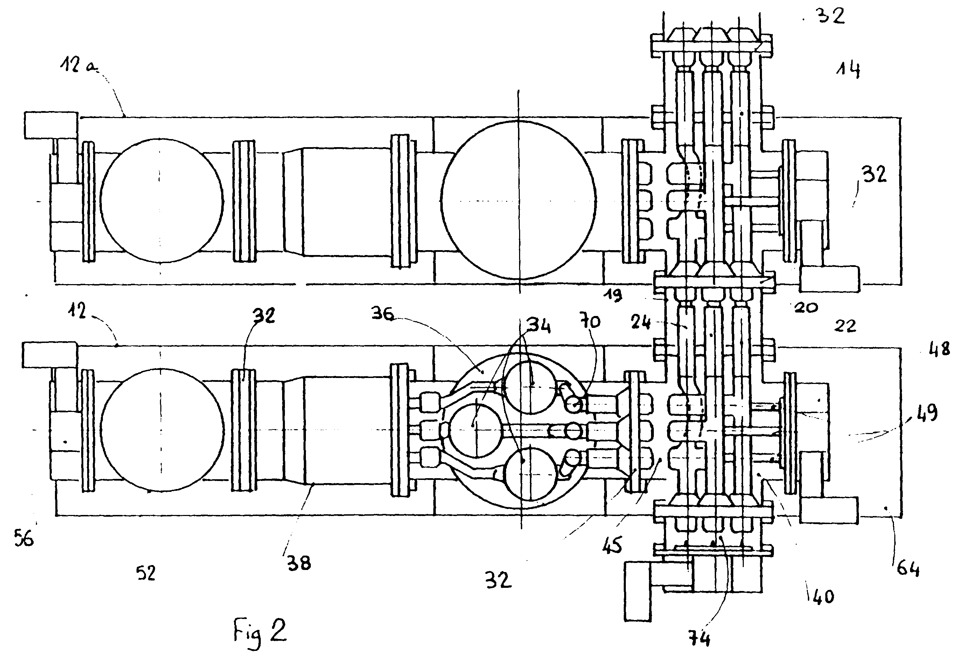

Sur les figures 1 à 3, un poste blindé de distribution à haute tension comporte une enveloppe 10 métallique mise à la terre, et remplie d'un gaz à rigidité diélectrique élevée, notamment de l'hexafluorure de soufre sous pression. Le poste est équipé d'une pluralité de travées 12,12a, (deux sont représentées sur la figure 2), échelonnées à intervalles réguliers le long d'un premier et d'un deuxième jeux de barres 14,16 d'alimentation, chaque travée 12,12a renfermant l'appareillage électrique spécifique d'interruption, de sectionnement et de connexion associé à un départ 18.

Chaque jeu de barres 14,16 est logé dans une enceinte 19 cylindrique faisant partie de l'enveloppe 10 métallique, et comprend trois barres 20,22,24; 26,28,30 conductrices d'alimentation triphasée. Les deux jeux de barres 14,16 sont superposés dans le sens de la hauteur, et les travées 12,12a se trouvent d'un même côté de l'enceinte 19.

L'enveloppe 10 métallique de chaque travée 12,12a est subdivisée en différents compartiments formés par des tronçons ou caissons élémentaires raccordés les uns aux autres de manière étanche par des brides ou des embouts de raccordement, avec interposition d'isolateurs supports 32 formant le cloisonnement entre les compartiments adjacents. Les isolateurs supports 32 sont traversés par les barres et les conducteurs électriques de connexion électrique des éléments de l'appareillage contenus dans les compartiments.

Chaque travée 12,12a comporte un disjoncteur tripolaire 34 logé dans un compartiment disjoncteur 36 ayant trois embouts de raccordement, respectivement à un compartiment de mesure 38 sur le côté gauche, et à deux compartiments jeu de barres 40,42 superposés sur le côté droit. Le compartiment de mesure 38 renferme un transformateur de courant 44 triphasé et un sectionneur triphasé de mise à la terre 46.

Le compartiment jeu de barres 40 supérieur associé au premierjeu de barres 14 contient en plus des trois barres conductrices 20,22,24 d'alimentation électrique, un premier sectionneur triphasé d'aiguillage 45 destiné à assurer la connexion électrique du disjoncteur 34 aux barres correspondantes 20,22,24 en position de fermeture, et l'isolement électrique en position d'ouverture. Le sectionneur d'aiguillage 45 est actionné à coulissement par un mécanisme de commande 48 fixé à la bride externe du compartiment 40, tandis que la bride opposée de connexion au compartiment disjoncteur 36 porte les contacts fixes du sectionneur d'aiguillage 45 dont les broches mobiles (non représentées) actionnées par les tiges isolantes 49 s'étendent perpendiculairement aux barres d'alimentation 20,22,24.

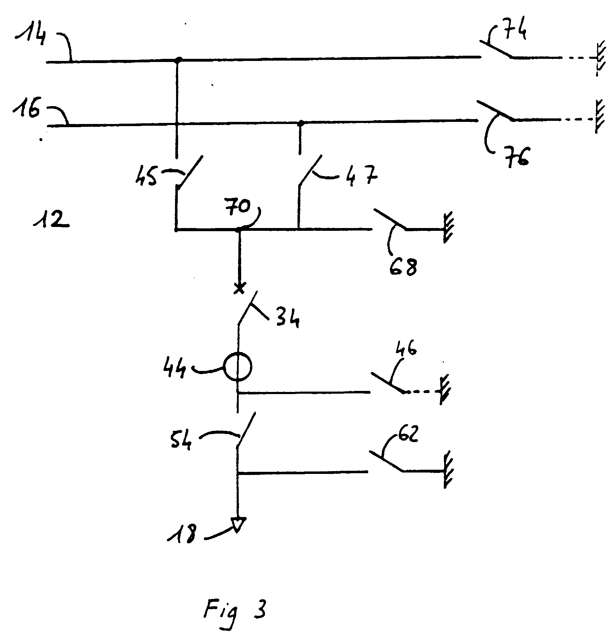

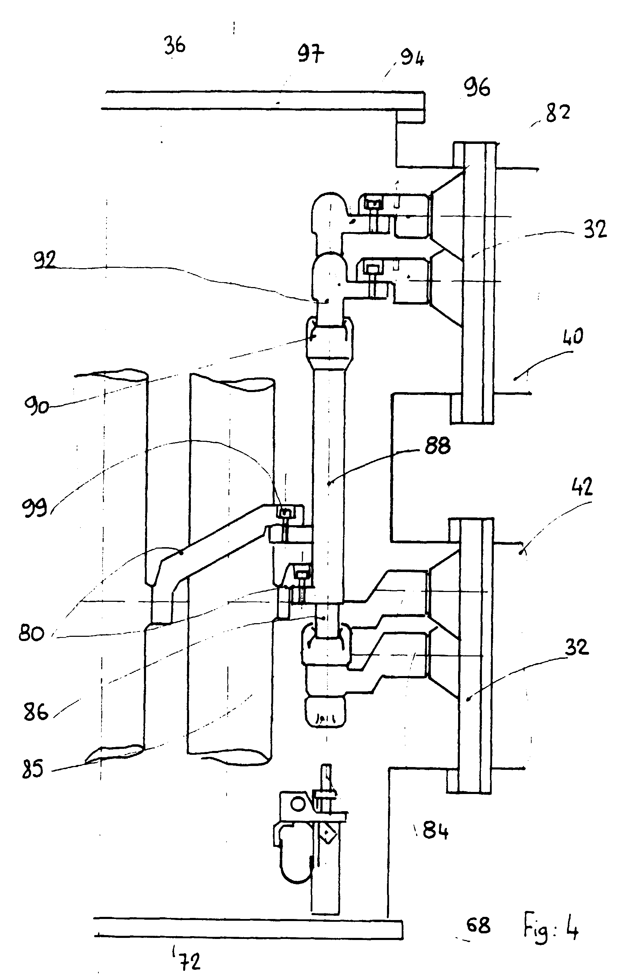

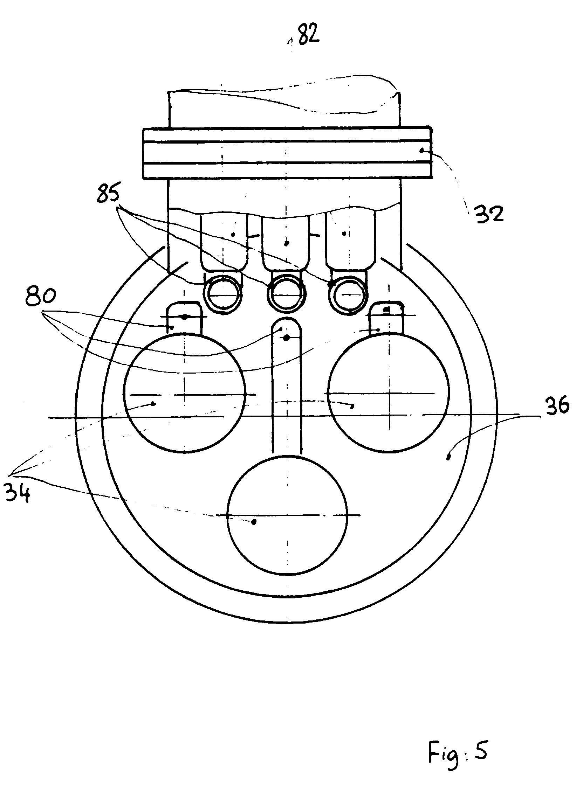

La composition du compartiment jeu de barres 42 inférieur est identique à celle du compartiment 40 supérieur, et est équipée d'un deuxième sectionneur triphasé d'aiguillage 47 (voir figure 3) associé au deuxième jeu de barres 16, et piloté par un mécanisme de commande 50 (figure 1).

Le compartiment de mesure 38 est intercalé entre le compartiment disjoncteur 36 et un compartiment de sectionnement 52 renfermant un sectionneur triphasé de ligne 54 actionné par un mécanisme de commande 56. Les câbles de départ 18 sont connectés à un compartiment de raccordement 58 renfermant une boite à câbles 60 triphasée et un sectionneur triphasé de mise à la terre 62 piloté par un mécanisme de commande 64. Le compartiment de raccordement 58 est placé sous le compartiment de sectionnement 52, et prend appui sur le socle 64 par l'intermédiaire d'un support mécanique 66 fixe.

Sur la partie intermédiaire du socle 64 repose également le caisson 67 de commande du disjoncteur 34. Les pôles de ce dernier s'étendent verticalement à l'intérieur du compartiment disjoncteur 36, lequel renferme en plus un sectionneur triphasé de mise à la terre 68. Le dispositif de connexion électrique 70 commune entre le disjoncteur 34 tripolaire et les deux sectionneurs d'aiguillage 45,47 associés aux deux jeux de barres 14,16, est logé dans le compartiment disjoncteur 36 en s'étendant parallèlement aux pôles du disjoncteur 34. La partie inférieure du dispositif de connexion 70 est équipée de trois contacts fixes 72 coopérant avec les broches mobiles correspondantes du sectionneur triphasé de mise à la terre 68.

Un sectionneur triphasé de mise à la terre 74,76 (voir figure 2 et 3) est associé d'autre part à chaque jeu de barres 14,16 pour assurer la mise à la terre des barres correspondantes 20,22,24; 26,28,30.

La fermeture de l'un des sectionneurs d'aiguillage 45 ou 47 permet d'alimenter chaque travée 12,12a respectivement par le premier ou le deuxième jeu de barres 14,16, le disjoncteur 34 assurant la position du départ 18.

Lors d'une intervention sur l'une des travées de l'installation, par exemple la travée 12 représentée sur la figure 1, il suffit d'isoler cette travée des deux jeux de barres 14,16 par ouverture des deux sectionneurs d'aiguillage 45,47. La travée étant isolée, il est possible de mettre à l'atmosphère l'un des compartiments 36,38,52,58 dans lequel l'intervention doit être effectuée.

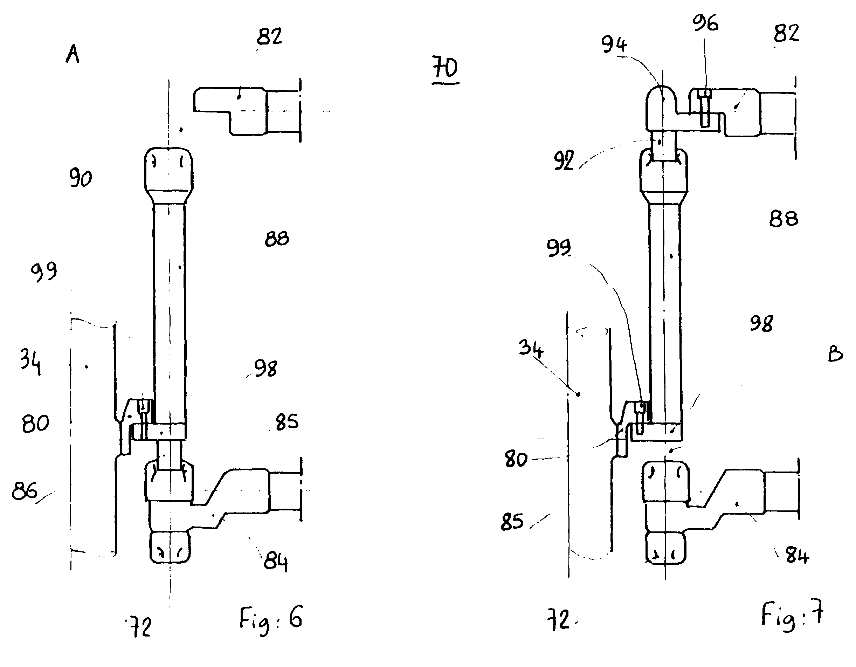

Lors d'une défaillance ou de mise hors tension pour réparation de l'un des jeux de barres 14,16, notamment pour l'échange d'un isolateur support 32 jeu de barres, les travées 12,12a peuvent être alimentées par l'autre jeu de barres pour maintenir la continuité de service grâce à la possibilité de démontage partiel du dispositif de connexion 70 commune à l'intérieur du compartiment disjoncteur 36. Ce dispositif de connexion 70 entre le disjoncteur 34 et les deux jeux de barres 14,16, comporte selon l'invention (voir figures 4 et 5), une première série de trois connecteurs 80 fixés aux pôles respectifs du disjoncteur 34, une deuxième série de trois connecteurs 82 portés par l'isolateur support 32 du compartiment jeu de barres supérieur 40, et une troisième série de trois connecteurs 84 portés par l'isolateur support 32 du compartiment jeu de barres inférieur 42. Les contacts fixes 72 du sectionneur de mise à la terre 68 sont agencés à la partie inférieure des connecteurs 84, lesquels comportent à l'opposé des contacts à tulipe 85 destinés à recevoir des plots de contact 86 solidarisés à des conducteurs intermédiaires 88 constituant une liaison électrique commune du disjoncteur 34 avec les deux jeux de barres 14,16. A l'opposé des plots de contact 86, les conducteurs 88 sont équipés de contacts à tulipe 90 coopérant par enfichage avec des plots de contacts 92 solidarisés à des pièces de raccordement en forme d'éclisses 94, fixées aux connecteurs 82 correspondants par des vis d'assemblage 96. La partie intermédiaire de chaque conducteur 88 de liaison est dotée d'une barrette 98 de raccordement avec le connecteur 80 correspondant du disjoncteur 38. Le raccordement s'opère par des vis d'assemblage 99.

L'accès aux deux séries de vis d'assemblage 96,99 s'effectue après démontage du couvercle 97 prévu à la partie supérieure du compartiment disjoncteur 36. Des inserts sont prévus dans les connecteurs 82 pour autoriser le raccordement temporaire de mise à la terre de travail. Les trois conducteurs 88 de liaison commune se trouvent dans un même plan (voir figure 2) s'étendant perpendiculairement au plan de la figure 1, et parallèlement aux barres 20 à 30. Les éclisses 94 et les conducteurs 88 constituent des pièces de raccordement déconnectables après désserrage des vis 96,99 appropriées. La figure 5 montre l'intérieur du compartiment disjoncteur 36 après retrait total du dispositif de connexion 70.

Le mode de raccordement (voir figures 6 et 7) du dispositif de connexion 70 dépend du jeu de barres 14 ou 16 endommagé ou en réparation.

### 1) Cas d'une réparation du premier jeu de barres 14 supérieur

La réparation consiste par exemple à remplacer l'isolateur support 32 (voir figure 2) ménagé entre deux compartiments jeu de barres 40 adjacents associés aux deux travées 12,12a. Le jeu de barres 14 supérieur est hors tension et mis à la masse par le sectionneur de mise à la terre 74. Les opérations suivantes sont effectuées successivement dans la travée 12:
- ouverture du disjoncteur 34 et des deux sectionneurs d'aiguillage 45,47 pour la mise hors tension de la travée 12,
- fermeture des sectionneurs de mise à la terre 68 et 46,
- démontage du couverde 97 après mise à l'atmosphère du compartiment disjoncteur 36,
- enlèvement des ensembles éclisses 94 et plots de contact 92 après dévissage des vis 96 avec formation d'un intervalle d'isolement A entre les conducteurs 88 et les connecteurs 82 correspondants (voir figure 6), l'intervalle d'isolement étant en série avec le premier sectionneur d'aiguillage 45 associé au jeu de barres 14 endommagé,
- fermeture du premier sectionneur d'aiguillage 45 pour la mise à la masse des connecteurs 82 par le sectionneurs de mise à la terre 74 du premierjeu de barre 14,
- remplissage de gaz SF6 dans le compartiment 36, et ouverture des sectionneurs de terre 46,68,
- fermeture du deuxième sectionneur d'aiguillage 47 pour la remise en service de la travée 12 sur le jeu de barre 16 non endommagé et restant en permanence sous tension pendant l'opération de démontage.
- fermeture du disjoncteur 34.

Les mêmes opérations sont effectuées sur la travée 12a adjacente à l'isolateur support 32 à échanger. Les deux compartiments jeux de barres 40 adjacents sont alors mis à l'atmosphère, suivi du démontage des brides de fixation, et du remplacement de l'isolateur support, par un élément neuf.

### 2) Cas d'une réparation du deuxième jeu de barres 16 inférieur

Le premier jeu de barres 14 reste sous tension. Les trois premières opérations jusqu'au démontage du couvercle 97 sont identiques à celles du premier cas, suivies des opérations suivantes:
- mise en place d'un sectionneur de mise à la terre de travail (non représenté) dans les inserts des connecteurs 82 supérieurs,
- démontage des éclisses 94 et des conducteurs 88 de la liaison commune après dévissage des vis 96,99,
- démontage des plots de contact 86 sur les conducteurs 88, et remise en place de ces derniers avec les éclisses 94 pour rétablir la liaison des connecteurs 80 du disjoncteur 34 avec les connecteurs 82 supérieurs. Il en résulte la présence d'un intervalle d'isolement vertical B (voir figure 7) entre les contacts à tulipe 85 et les barrettes 98.
- enlèvement des sectionneurs de mise à la terre de travail, et remise en service du disjoncteur 34 sur le jeu de barres 14 sain après fermeture du premier sectionneur d'aiguillage 45.

Dans les deux cas d'intervention sur les premier et deuxième jeux de barres 14,16, la mise hors tension simultanée des deux travées 12,12a est évitée en cas d'échange de l'isolateur support d'un jeu de barre, grâce à l'agencement déconnectable des éclisses 94 et des conducteurs 88 de liaison commune, permettant de créer un intervalle d'isolement de sécurité à l'intérieur du compartiment disjoncteur rempli de gaz isolant SF6 sous pression. Le jeu de barres sain reste toujours sous tension pendant la réparation du jeu de barres endommagé.

L'invention a été décrite comme étant appliquée à un poste triphasé à enveloppe commune de logement des trois phases, mais elle s'étend bien entendu à des postes à phases séparées, chaque phase ayant sa propre enveloppe métallique mise à la terre.

## Revendications

1. Poste blindé à haute tension et à double jeu de barres (14, 16) d'alimentation, ayant une enveloppe (10) métallique mise à la terre et remplie d'un gaz isolant à rigidité diélectrique élevée, ladite enveloppe (10) étant subdivisée dans chaque travée (12, 12a) en différents compartiments étanches comprenant notamment :
- un compartiment disjoncteur (36) de logement d'un disjoncteur (34) assurant la protection du départ (18) de la travée (12, 12a);
- un premier compartiment jeu de barres (40) renfermant un premier sectionneur d'aiguillage (45) associé à au moins une barre conductrice (20, 22, 24) du premier jeu de barres (14) d'alimentation;
- un deuxième compartiment jeu de barres (42) renfermant un deuxième sectionneur d'aiguillage (47) associé à au moins une barre conductrice (20, 28, 30) du deuxième jeu de barres (16) d'alimentation;
- et un dispositif de connexion électrique (70) commune entre le disjoncteur (34) et les deux sectionneurs d'aiguillage (45, 47), lequel dispositif est logé dans le compartiment disjoncteur (36), et comprenant un conducteur intermédiaire (88) s'étendant parallèlement au disjoncteur (34) dans l'alignement avec un sectionneur de mise à la terre (68), et constituant le point commun de raccordement du disjoncteur (34) avec les deux jeux de barres (14, 16), et au moins une liaison électrique (94, 92, 86) déconnectable,
caractérisé en ce que
la liaison électrique (94, 92, 86) déconnectable est agencée axialement à chaque extrémité du conducteur intermédiaire (88) pour créer après démontage, un premier ou un deuxième intervalle d'isolement A, B prédéterminé dans le compartiment disjoncteur (36), respectivement avec les connecteurs (82, 84) de raccordement de l'un des sectionneurs d'aiguillage (45, 47), l'alimentation du disjoncteur (34) étant réalisée par l'intermédiaire de l'autre sectionneur d'aiguillage, que l'une des extrémités du conducteur intermédiaire (88) comporte un premier contact à tulipe (90) destiné à recevoir un premier plot de contact (92) solidaire d'une pièce de raccordement en forme d'éclisse (94), fixée par une première vis d'assemblage (96) au connecteur (82) du premier sectionneur d'aiguillage (45), le démontage de l'éclisse (94) après dévissage de la vis (96) engendrant ledit premier intervalle d'isolement A en cas de réparation du premier jeu de barre (14), et que l'autre extrémité du conducteur intermédiaire (88) est équipé d'un deuxième plot de contact (86) destiné à pénétrer dans un deuxième contact à tulipe (85) porté par le connecteur (84) du deuxième sectionneur d'aiguillage (47), le démontage du deuxième plot de contact (86) engendrant ledit deuxième intervalle d'isolement B en cas de réparation du deuxième jeu de barres (16).

2. Poste blindé selon la revendication 1, caractérisé en ce que à l'opposé du deuxième contact à tulipe (85) du connecteur (84) se trouve un troisième contact fixe à tulipe (72) coopérant avec le contact mobile du sectionneur de mise à la terre (68), et que le conducteur intermédiaire (88) est dotée d'une barrette (98) raccordée au disjoncteur (34) par une deuxième vis de fixation (99), les premier et deuxième vis (96, 99) étant accessibles après démontage du couvercle (97) prévu à la partie supérieure du compartiment disjoncteur (36).

## Patentansprüche

1. Gekapselte Hochspannungs-Schaltanlage mit doppelter Sammelschieneneinspeisung (14, 16) in einem geerdeten und mit einem Isoliergas hoher dielektrischer Festigkeit gefüllten Metallgehäuse (10), das pro Schaltfeld (12, 12a) in mehrere gasdichte Abteile, insbesondere mit folgender Bestückung, unterteilt ist:
- ein Leistungsschalterabteil (36) mit einem Leistungsschalter (34) zum Schutz des Abgangs (18) des jeweiligen Schaltfelds (12, 12a);
- ein erstes Sammelschienenabteil (40) mit einem ersten Sammelschienen-Umschalttrenner (45), der mit mindestens einer Sammelschiene (20, 22, 24) der ersten Einspeisung (14) verbunden ist,
- ein zweites Sammelschienenabteil (42) mit einem zweiten Sammelschienen-Umschalttrenner (47), der mit mindestens einer Sammelschiene (20, 22, 24) der zweiten Einspeisung (14) verbunden ist,
- und ein zwischen dem Leistungsschalter (34) und den beiden Sammelschienen-Umschalttrennern (45, 47) angeordnetes gemeinsames Verbindungsstück (70), welches im Leistungsschalterabteil (36) angeordnet ist und ein Zwischenleiterelement (88), das parallel zum Leistungsschalter (34) sowie in einer Flucht mit einem Erdungsschalter (68) verläuft und den gemeinsamen Anschlußpunkt des Leistungsschalters (34) und der beiden Einspeisungen (14, 16) darstellt, sowie mindestens eine trennbare elektrische Verbindung (94, 92, 86) umfaßt,
dadurch gekennzeichnet daß
daß die trennbare elektrische Verbindung (94, 92, 86) an den beiden Enden des Zwischenleiterelements (88) ausgebildet ist, um nach ihrer Unterbrechung im Leistungsschalterabteil (36) eine festgelegte erste bzw. zweite Trennstrecke A, B in bezug auf die Anschlußklemmen (82, 84) eines der Sammelschienen-Umschalttrenner (45, 47) zu schaffen, wobei der jeweils andere Sammelschienen-Umschalttrenner die Einspeisung des Leistungsschalters (34) übernimmt, daß ein Anschlußende des Zwischenleiterelements (88) eine erste Kontaktzange (90) zur Aufnahme eines ersten Kontaktstifts (92) aufweist, der mit einem, über eine Verbindungsschraube (96) an der Anschlußklemme (82) des ersten Sammelschienen-Umschalttrenners (45) befestigten, laschenförmigen Anschlußstück (94) fest verbunden ist, wobei durch Lösen der Anschlußlasche (94) nach Herausdrehen der Schraube (96) die genannte erste Trennstrecke A für die Instandsetzung der ersten Einspeisung (14) entsteht, und daß das andere Anschlußende des Zwischenleiterelements (88) einen zweiten Kontaktstift (86) zur Einführung in eine zweite Kontaktzange (85) aufweist, die an der Anschlußklemme (84) des zweiten Sammelschienen-Umschalttrenners (47) befestigt ist, wobei durch die Trennung des zweiten Kontaktstifts (86) die genannte zweite Trennstrecke B für die Instandsetzung der zweiten Einspeisung (16) entsteht.

2. Gekapselte Schaltanlage nach Anspruch 1, dadurch gekennzeichnet, daß an der gegenüberliegenden Seite der zweiten Kontaktzange (85) der Anschlußklemme (84) eine dritte, feststehende Kontaktzange (72) angeordnet ist, die mit dem beweglichen Kontakt des Erdungsschalters (68) zusammenwirkt, und daß das Zwischenleiterelement (88) einen, über eine zweite Befestigungsschraube (99) mit dem Leistungsschalter (34) verbundenen Anschlußsteg (98) aufweist, wobei die erste und die zweite Schraube (96, 99) nach dem Entfernen des an der Oberseite des Leistungsschalterabteils (36) angebrachten Deckels (97) zugänglich sind.

## Claims

1. A high voltage metalclad substation with a double supply busbar (14, 16), having an earthed metal enclosure (10) filled with a high dielectric strength insulating gas, said enclosure (10) being subdivided in each bay (12, 12a) into different tight compartments notably comprising :
- a circuit breaker compartment (36) housing a circuit breaker (34) providing protection of the feeder (18) of each bay (12, 12a);
- a first busbar compartment (40) housing a first switching disconnector (45) associated to at least one conducting bar (20, 22, 24) of the first supply busbar (14);
- a second busbar compartment (42) housing a second switching disconnector (47) associated to at least one conducting bar (26, 28, 30) of the second supply busbar (16);
- and a common electrical connection device (70) between the circuit breaker (34) and the two switching disconnectors (45, 47), which device is housed in the circuit breaker compartment (36), and comprising an intermediate conductor (88) extending parallel to the circuit breaker (34) in alignment with an earthing switch (68) , and constituting the common connection point of the circuit breaker (34) with the two busbars (14, 16), and at least one disconnectable electrical connection (94, 92, 86),
characterized in that
the disconnectable electrical connection (94, 92, 86) is arranged axially at each end of the intermediate conductor (88) to create after disassembly a first or second predetermined insulating gap A, B in the circuit breaker compartment (36), respectively with the connecting connectors (82, 84) of one of the switching disconnectors (45, 47), supply of the circuit breaker (34) being performed by means of the other switching disconnector, that one of the ends of the intermediate conductor (88) comprises a first tulip-finger contact (90) designed to receive a first contact stud (92) securedly united to a connecting part in the form of a fish-plate (94), affixed by a first assembly screw (96) to the connector (82) of the first switching disconnector (45), disassembly of the fish-plate (94) after unscrewing the screw (96) generating said first insulating gap A in the event of repairs to the first busbar (14), and that the other end of the intermediate conductor (88) is equipped with a second contact stud (86) designed to penetrate into a second tulip-finger contact (85) borne by the connector (84) of the second switching disconnector (47), disassembly of the second contact stud (86) generating said second insulating gap B in the event of repairs to the second busbar (16).

2. The metalclad substation according to claim 1, characterized in that opposite the second tulip-finger contact (85) of the connector (84) there is located a stationary third tulip-finger contact (72) cooperating with the movable contact of the earthing switch (68), and that the intermediate conductor (88) is provided with a strip (98) connected to the circuit breaker (34) by a second fixing screw (99), the first and second screws (96, 99) being accessible after the cover (97) provided at the top part of the circuit breaker compartment (36) has been removed.
